# EUROPEAN PATENT APPLICATION

(11) **EP 2 811 610 A1**
(43) Date of publication of application: **10.12.2014**
(21) Application number: 13743419.7
(22) Date of filing: 01.02.2013
(51) Int. Cl.: H02J 7/00

(54) **CHARGING-CABLE STORAGE DEVICE**

(30) Priority: 01.02.2012 JP 2012020093
(71) Applicant: Chuo Hatsujo Kabushiki Kaisha, Nagoya-shi, Aichi 458-8505 (JP)
(72) Inventor: MIZUNO, Eiji, Nagoya-shi Aichi 458-8505 (JP); IWAMI, Kenji, Nagoya-shi Aichi 458-8505 (JP)
(74) Representative: Kramer - Barske - Schmidtchen
(86) International application number: PCT/JP2013/052373
(87) International publication number: WO 2013/115375

(57) **Abstract**

The present invention is a charging-cable storage device that stores a charging cable and a charging control box each used for an electrically-driven vehicle having an electrically-driven motor for traveling. The charging-cable storage device includes a rotating drum that is rotatable and that rewinds the charging cable, and a fixing portion that is provided in the rotating drum and that fixes the charging control box.

## Description

### CROSS-REFERENCE TO RELATED APPLICATIONS

This international application claims the benefit of Japanese Patent Application No. 2012-20093 filed February 1, 2012 in the Japan Patent Office, and the entire disclosure of Japanese Patent Application No. 2012-20093 is incorporated herein by reference.

### TECHNICAL FIELD

The present invention relates to a charging-cable storage device applied to an electrically-driven vehicle.

The electrically-driven vehicle is a vehicle having an electrically-driven motor for traveling. More specifically, the electrically-driven vehicle includes, for example, an electric vehicle having only an electrically-driven motor as a driving source, a plug-in hybrid vehicle having an electrically-driven motor and an internal combustion engine, and the like.

### BACKGROUND ART

For example, in an invention described in Patent Document 1, a rotating drum is wound around by a charging cable having at one end thereof a vehicle-side connector (socket) to be connected to an electrically-driven vehicle. In a storage box in which the rotating drum is rotatably stored, there is stored a charging cable having at one end thereof a power-source-side connector (socket) to be connected to a charging power source.

When charging the electrically-driven vehicle, it is necessary to pull out the charging cable winding around the rotating drum from the storage box (the storage device) and attach the vehicle-side connector to the electrically-driven vehicle, and to attach the power-source-side connector to the charging device, in a state in which the entirety of a charging-cable storage device is locked and fixed to a charging device provided at a charging power source side.

### PRIOR ART DOCUMENTS

### PATENT DOCUMENTS

Patent Document 1: Japanese Unexamined Patent Application Publication No. 2010-115037

### SUMMARY OF THE INVENTION

### PROBLEMS TO BE SOLVED BY THE INVENTION

When charging the electrically-driven vehicle, a charge control box is required that has a control circuit incorporated therein, such as a CCID (Charge Circuit Interrupt Device) and the like, which control circuit provides a charge control. The charge control box needs to be disposed at a position as close as possible to the power-source-side connector in a charging path from the power-source-side connector to the electrically-driven vehicle, due to a specification limitation of the charge control box.

In regard to the above, the aforementioned specification limitation is not taken into consideration for a charging-cable storage device described in Patent Document 1. Therefore, such charging-cable storage devices are inadequate for use as a storage device storing a charging cable for an electrically-driven vehicle.

One aspect of the present invention is to provide a charging-cable storage device suitable for storing a charging cable for an electrically-driven vehicle.

### MEANS FOR SOLVING THE PROBLEMS

A charging-cable storage device of the present invention stores a charging cable and a charging control box each used for an electrically-driven vehicle having an electrically-driven motor for traveling. The charging-cable storage device includes a rotating drum that is rotatable and that rewinds the charging cable, and a fixing portion that is provided in the rotating drum and that fixes the charging control box.

Thus, in the present invention, there is provided, in the rotating drum, the fixing portion that fixes the charging control box, whereby the charging control box can be stored in the rotating drum.

Therefore, as compared with the case in which a charging control box is disposed on an outside of the rotating drum, a dead space inside the rotating drum is effectively utilized, while the charging control box is protected, whereby the charging-cable storage device can be downsized.

While the charging control box is protected, the charging control box can be disposed at a position close to the power-source-side connector and the charging-cable storage device can be downsized. Therefore, it is possible to achieve a charging-cable storage device suitable for storing a charging cable used for the electrically-driven vehicle.

In the present invention, the charging control box is not a requirement for a configuration of the present invention, but the fixing portion that fixes the charging control box is.

Therefore, it is apparent that the charging control box can be, for example, an accessory of a vehicle, purchased separately, or the like. Further, the charging control box can be supplied as an accessory of the charging-cable storage device according to the present invention.

### BRIEF DESCRIPTION OF THE DRAWINGS

FIG. 1 is a perspective view of an external appearance of a charging-cable storage device according to a first embodiment of the present invention.
FIG. 2 is an axial sectional view of the charging-cable storage device in an axial direction thereof according to the first embodiment of the present invention.
FIG. 3 is an axial sectional view of the charging-cable storage device in a direction perpendicular to the axial direction thereof according to the first embodiment of the present invention.
FIG. 4 is a view showing a mode of usage of the charging-cable storage device according to the first embodiment of the present invention.
FIG. 5 is a perspective view of an external appearance of the charging-cable storage device according to the first embodiment of the present invention.
FIGS. 6A to 6C are views each showing, as an example, a mode of installation of the charging-cable storage device according to the present invention.
FIG. 7 is an axial sectional perspective view of a charging-cable storage device in the axial direction thereof according to a second embodiment of the present invention.
FIG. 8 is an axial sectional perspective view of a charging-cable storage device in the axial direction thereof according to a third embodiment of the present invention.
FIG. 9 is an axial sectional perspective view of a charging-cable storage device in the axial direction thereof according to a fourth embodiment of the present invention.

### EXPLANATION OF REFERENCE NUMERALS

1... charging-cable storage device, 3...charging cable, 3A...charging control box, 3B...terminal-side charging cable, 3C...rewound-side charging cable, 3D...terminal connector, 3E...vehicle-side connector, 5...rotating drum, 5A...rewind groove, 5B...cylinder, 7...drum body, 7A...convex portion, 7B...fixing portion, 7C...insertion hole, 7D...connector rest, 7E... shaft portion, 9... casing, 9A...casing body, 9C... opening, 9D...bearing portion, 9B...gripper, 9F...fixing stay, 9G...hole, 11...handle, 13...slip ring, 13A...fixed-side brush, 13B...rotating-side electrode ring, 15A...connector, 15...power-source-side charging cable, 17...rewinding portion, 17A...spring, 17B...electric motor, 30...power-source-side connector

### MODE FOR CARRYING OUT THE INVENTION

"Embodiments of the invention" to be described hereinafter each shows one example of the embodiments. That is, matters specifying the invention or the like described in the scope of the claims are not limited to specific procedures, configurations, or the like to be described in the embodiments set forth below.

Each of the present embodiments describes a charging-cable storage device for an electrically-driven vehicle, such as a plug-in hybrid vehicle, to which the present invention is applied. Hereinafter, the embodiments of the present invention will be described with reference to the drawings.

### (Embodiment 1)

### 1. Summary of the Charging-Cable Storage Device

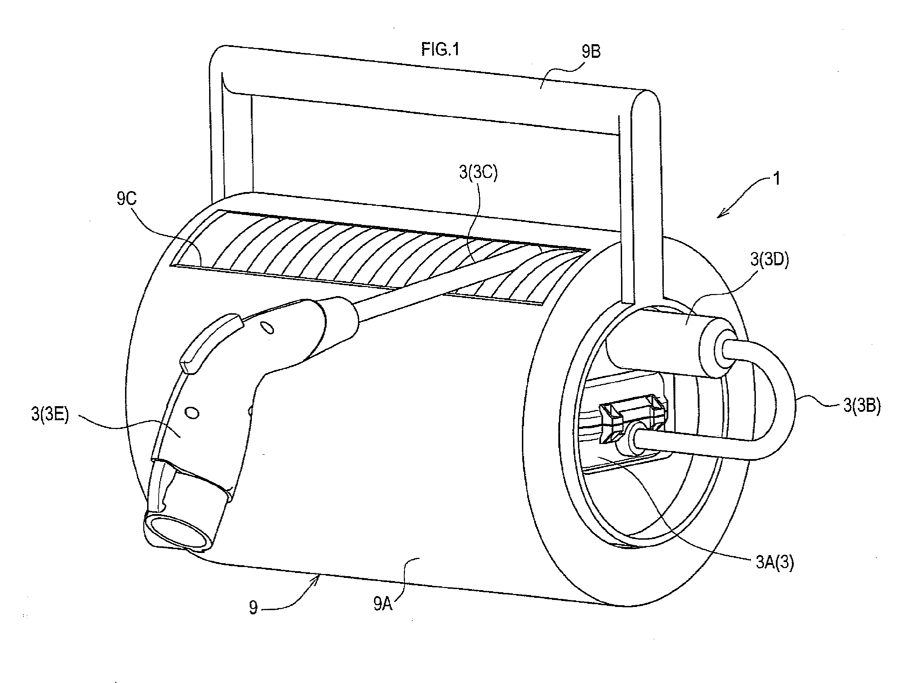

A charging-cable storage device 1 is a storage device that stores a charging cable 3 used for an electrically-driven vehicle having an electrically-driven motor for traveling, as shown in FIG. 1.

The charging cable 3 has a charging control box 3A provided thereto. The charging control box 3A has a control circuit incorporated therein, such as a CCID (Charge Circuit Interrupt Device) and the like, which control circuit provides a charge control. Further, the charging control box 3A is provided in an electric circuit that connects a charging power source with the electrically-driven vehicle.

For this reason, in many cases, the charging control box 3A is supplied, by an automotive manufacturer or the like, as a part of the charging cable 3. Hereinafter, a part of the charging cable 3 positioned nearer the charging power source in relation to the charging control box 3A will be named as a terminal-side charging cable 3B. A part of the charging cable 3 positioned nearer the electrically-driven vehicle in relation to the charging control box 3A will be named as a rewound-side charging cable 3C.

An end of the terminal-side charging cable 3B has a terminal connector 3D to be connected to the charging power source. An end of the rewound-side charging cable 3C has a vehicle-side connector 3E to be connected to the electrically-driven vehicle.

In other words, the charging cable 3 according to the present embodiment includes the charging control box 3A, the terminal-side charging cable 3B, the rewound-side charging cable 3C, the terminal connector 3D, the vehicle-side connector 3E, and the like.

### 2. Configuration of the Charging-Cable Storage Device

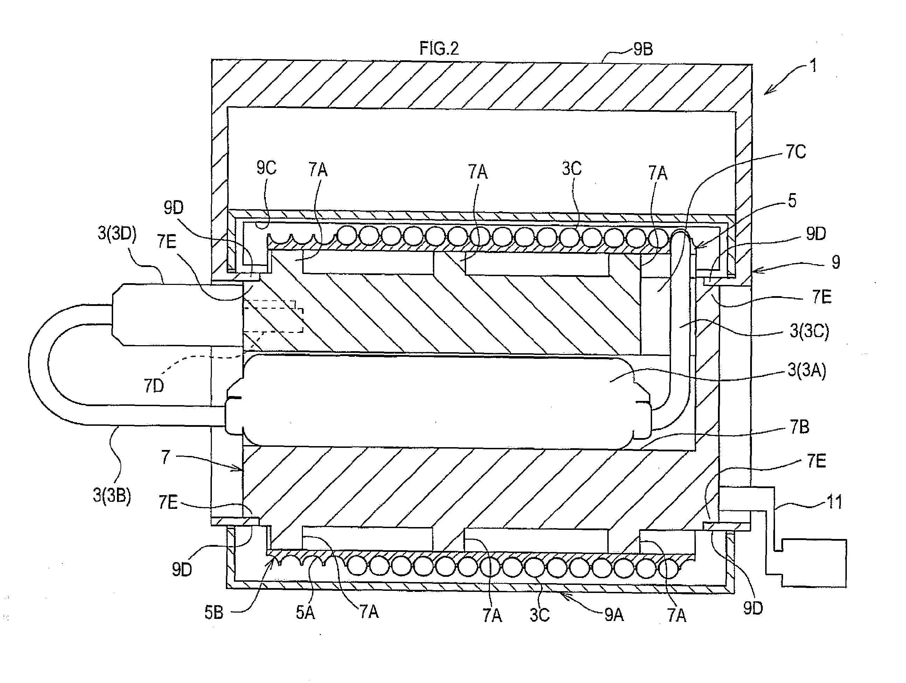

As shown in FIG. 2, the charging-cable storage device 1 includes a rotating drum 5 that rewinds the rewound-side charging cable 3C, a casing 9 that stores the rotating drum 5, and so on. The rotating drum 5 includes a cylinder 5B, a drum body 7, and so on.

The cylinder 5B is a cylindrical member having a rewind groove 5A spirally provided in an outer periphery of the cylinder 5B. The drum body 7 is fit into an inner periphery of the cylinder 5B. In the present embodiment, both of the cylinder 5B and the drum body 7 are made of resin.

The cylinder 5B and the drum body 7 need to be fit together so as to generate a frictional force in such a manner that the drum body 7 does not slip with respect to the cylinder 5B at contact portions between the drum body 7 and the cylinder 5B, when pulling out the rewound-side charging cable 3C or when rewinding the rewound-side charging cable 3C.

In the present embodiment, in an outer periphery of the drum body 7, there is provided a convex portion 7A projecting toward the inner periphery of the cylinder 5B, such that an area of the contact portions between the drum body 7 and the cylinder 5B becomes small, thereby increasing pressure on such contact portions.

A plurality of the convex portion 7A are provided in an axial direction of the rotating drum 5 (three convex portions 7A are provided in the present embodiment). Each of the convex portions 7A is flange-shaped and projects throughout the entirety of the outer periphery of the drum body 7.

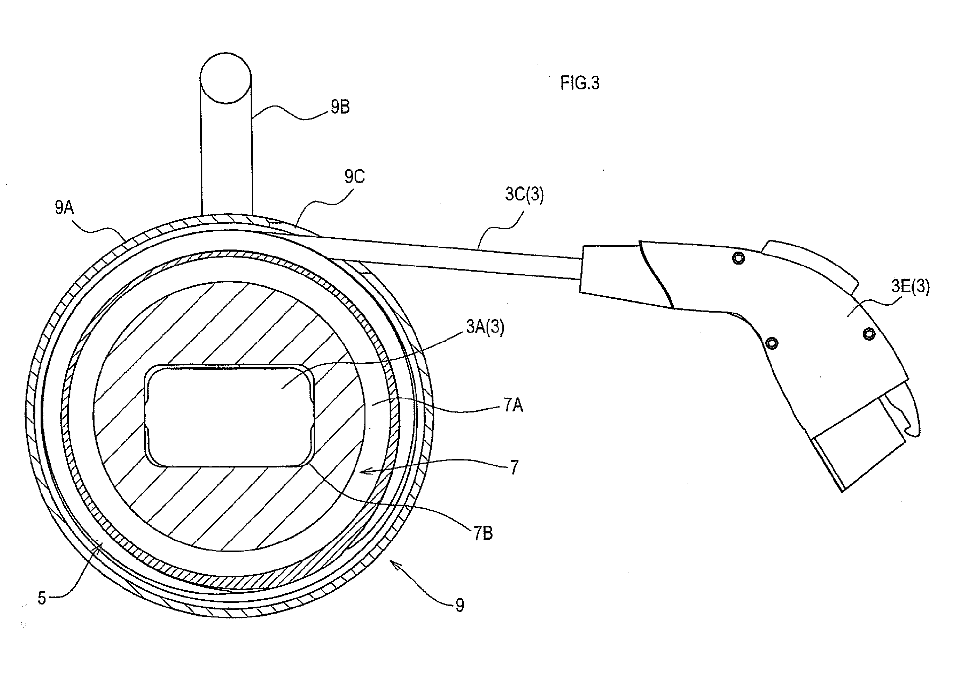

In the drum body 7, there is provided a fixing portion 7B that fixes the charging control box 3A. The fixing portion 7B is configured by a storage space that can store the charging control box 3A extending in an axial direction. As shown in FIG. 3, an inner wall surface of the storage space constituting the fixing portion 7B and an outer wall of the charging control box 3A are pressed against each other, whereby the charging control box 3A is fixed to an inside of the drum body 7.

As shown in FIG. 2, in one end of the drum body 7 in the axial direction, there is provided an insertion hole 7C extending in a radial direction from one end of the fixing portion 7B, i.e., the storage space, in the axial direction to the cylinder 5B. The rewound-side charging cable 3C extends from one end of the cylinder 5B in the axial direction via the insertion hole 7C to the rewind groove 5A.

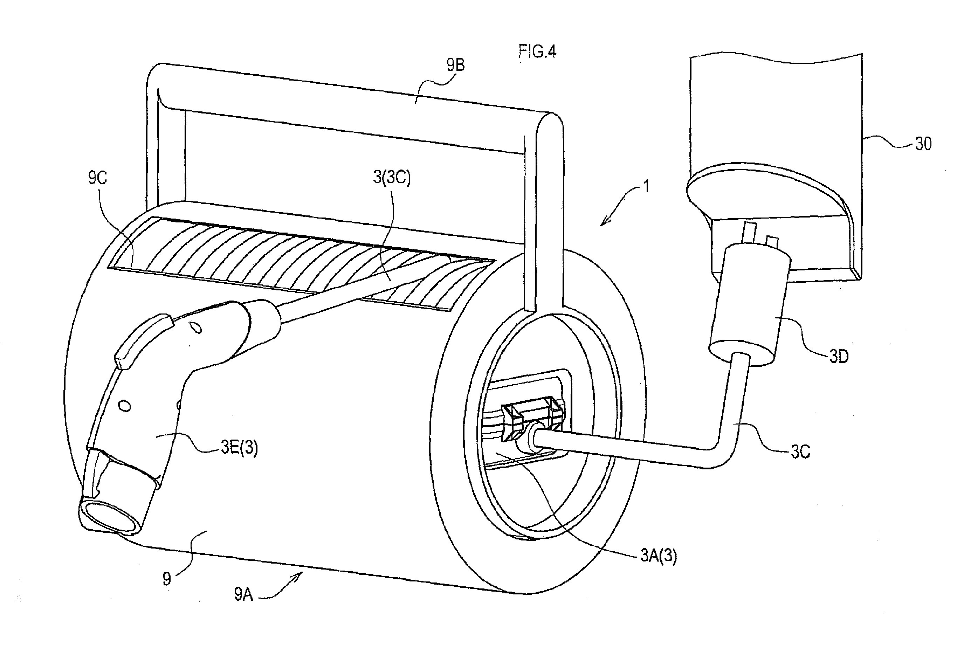

In the other end of the drum body 7 in the axial direction, there is provided a connector rest 7D to/from which the terminal connector 3D can be attached and detached. By attaching the terminal connector 3D to the connector rest 7D, it is possible to inhibit the terminal connector 3D and the terminal-side charging cable 3B from wobbling during non-charging time. As shown in FIG. 4, when charging, the terminal connector 3D is detached from the connector rest 7D. Then, the terminal connector 3D is attached to a power-source-side connector 30.

The charging control box 3A is fixed to the rotating drum 5. Therefore, in the present embodiment, when the rotating drum 5 is rotated, the terminal-side charging cable 3B is rotated along therewith. Thus, it is desirable that the rotating drum 5 is rotated, i.e., the rewound-side charging cable 3C is pulled out or rewound, after the terminal connector 3D is detached from the power-source-side connector 30 and attached to the connector rest 7D.

As shown in FIG. 1, the casing 9 includes a casing body 9A that is cylinder-shaped and that stores the rotating drum 5, a gripper 9B that is substantially U-shaped and that is attached to both ends of the casing body 9A in the axial direction, or the like.

In an outer periphery of the casing body 9A, there is provided an opening 9C extending in the axial direction. The opening 9C is an insertion opening through which the rewound-side charging cable 3C is inserted and/or pulled out when the rewound-side charging cable 3C rewound by the rotating drum 5 is inserted into and/or pulled out from the casing body 9A.

As shown in FIG. 2, in the casing 9, there is provided a bearing portion 9D that slidably contacts with the drum body 7, that is, a shaft portion 7E provided at each of both axial ends of the rotating drum 5, thereby rotatably holding the rotating drum 5. Therefore, the rotating drum 5 can be rotated with respect to the casing 9.

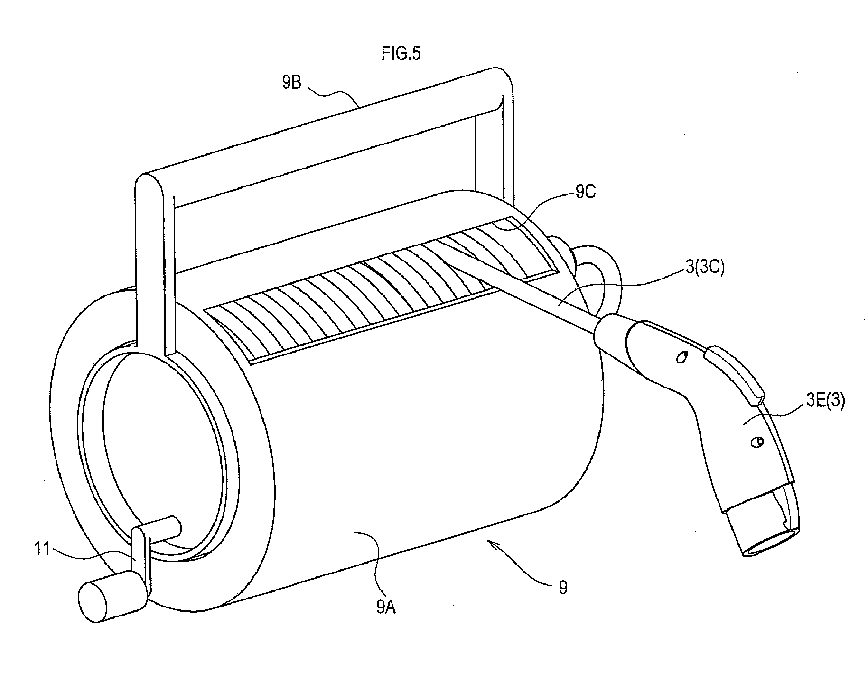

As shown in FIG. 5, in the one axial end of the drum body 7, there is provided a handle 11 that can be gripped by a user. Therefore, when the user grips the handle 11 and rotates the rotating drum 5, the rewound-side charging cable 3C can be rewound around the rotating drum 5

The casing 9 according to the present embodiment is configured such that a first casing positioned in the one axial end and a second casing positioned in the other axial end are attachably and detachably assembled. When the rotating drum 5 is stored into the casing 9, the first casing and the second casing, each of which constitutes the casing 9 divided into two, are assembled and fixed so as to sandwich the rotating drum 5.

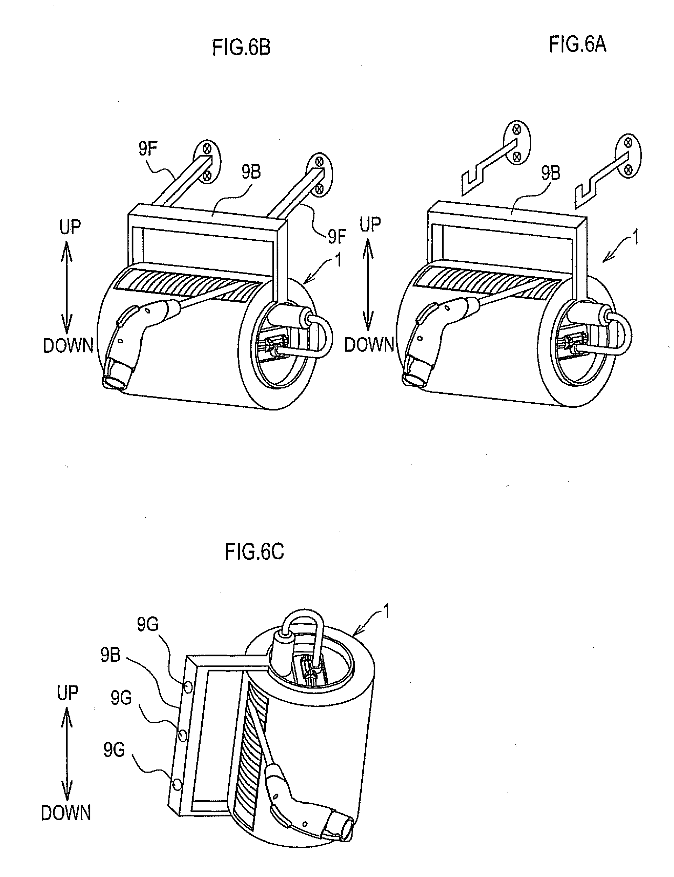

In regard to the charging-cable storage device 1 shown in FIG. 1, there has been simulated a mode of usage in which the user grips the gripper 9B. However, a mode of usage of the charging-cable storage device 1 according to the present invention should not be limited to such mode of usage. For example, the charging-cable storage device 1 can be disposed in various manners, as shown in FIGs. 6A to 6C.

It is possible to dispose the charging-cable storage device 1 in a manner in which the gripper 9B is hanged by a hook provided in a wall of a parking lot or the like (refer to FIG. 6A), or in a manner in which there is provided, in the gripper 9B, a fixing stay 9F that fixes the charging-cable storage device 1 to a wall of a parking lot or the like, to thereby fix the charging-cable storage device 1 to the wall of the parking lot or the like (refer to FIG. 6B). Further, it is possible to dispose the charging-cable storage device 1 in a manner in which a hole 9G is provided in the gripper 9B such that fastener such as a bolt can be inserted through the hole 9G, and in which the charging-cable storage device 1 is vertically installed such that the axial direction thereof corresponds to a vertical direction thereof (refer to FIG. 6C), or the like.

### 3. Characteristics of the Charging-Cable Storage Device

In the present embodiment, there is provided, in the rotating drum 5, the fixing portion 7B that fixes the charging control box 3A, whereby the charging control box 3A can be stored in the rotating drum 5.

Therefore, as compared with the case in which the charging control box 3A is disposed on an outside of the rotating drum 5, a dead space inside the rotating drum 5 is effectively utilized, while the charging control box 3A is protected, whereby the charging-cable storage device 1 can be downsized.

While the charging control box 3A is protected, the charging control box 3A can be disposed at a position close to the power-source-side connector 30 and the charging-cable storage device 1 can be downsized. Therefore, it is possible to achieve the charging-cable storage device 1 being suitable for storing the charging cable 3 used for the electrically-driven vehicle.

### (Embodiment 2)

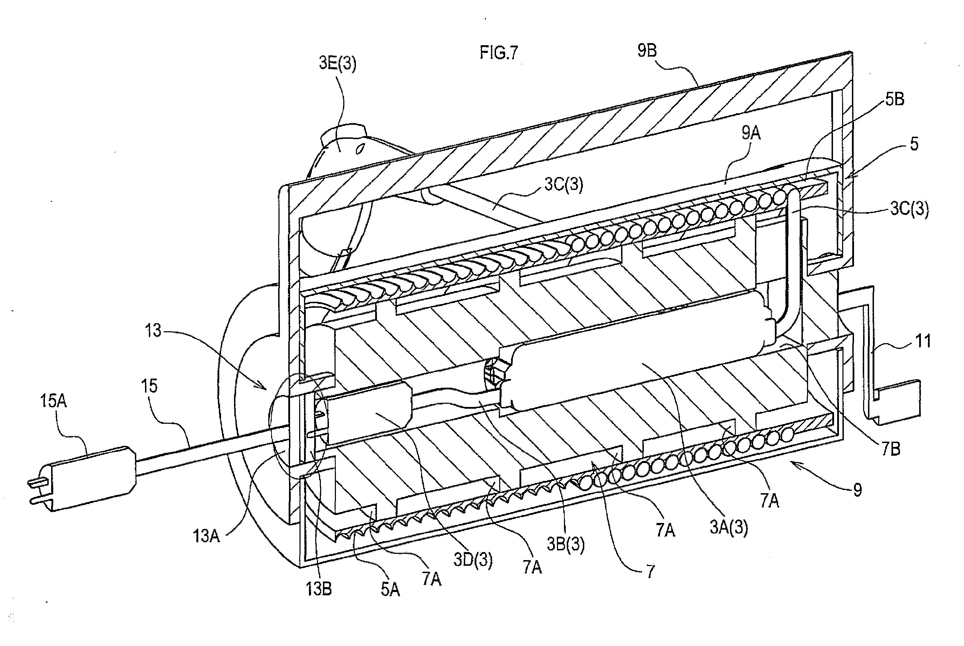

In the present embodiment, as shown in FIG. 7, there is slidably provided an electric contact that can be rotated, such as a slip ring 13 and the like. Therefore, the charging cable 3 can be conducted to the power-source-side connector 30 even when the rotating drum 5 is rotated.

The slip ring 13 according to the present embodiment includes a fixed-side brush 13A provided in the other longitudinal end of the casing 9, a rotating-side electrode ring 13B provided in the other longitudinal end of the drum body 7, or the like.

The terminal connector 3D, that is, the terminal-side charging cable 3B can be connected to the rotating-side electrode ring 13B. To the fixed-side brush 13A, there is connected a power-source-side charging cable 15 having, on an end thereof, a connector 15A connectable to the power-source-side connector 30.

Therefore, in the present embodiment, the rotating drum 5 can be rotated while keeping the charging cable 3 to be conducted to the power-source-side connector 30, whereby it is easy to pull out and to rewind the rewound-side charging cable 3C.

In the present embodiment, in FIG. 7, the connector rest 7D is not adopted because the power-source-side charging cable 15 is not rotated when the rotating drum 5 is rotated. However, the present embodiment is not limited to such manner. The connector rest 7D may be provided.

The power-source-side charging cable 15 is inhibited from wobbling by attaching the connector 15A to the connector rest 7D, thereby increasing a portability of the charging-cable storage device 1.

Further, it is simulated that, to the charging-cable storage device 1 shown in FIG. 7, there is applied the charging cable 3 supplied by an automotive manufacturer or the like, whereby the terminal connector 3D can be attached to the rotating-side electrode ring 13B.

However, the present embodiment is not limited to such manner. For example, the rotating-side electrode ring 13B can be directly connected to the terminal-side charging cable 3B or the charging control box 3A, not via the terminal connector 3D. In such a manner, a size of the charging-cable storage device 1 in an axial direction thereof can become as small as a size of the charging-cable storage device 1 in an axial direction thereof according to the first embodiment.

### (Embodiment 3)

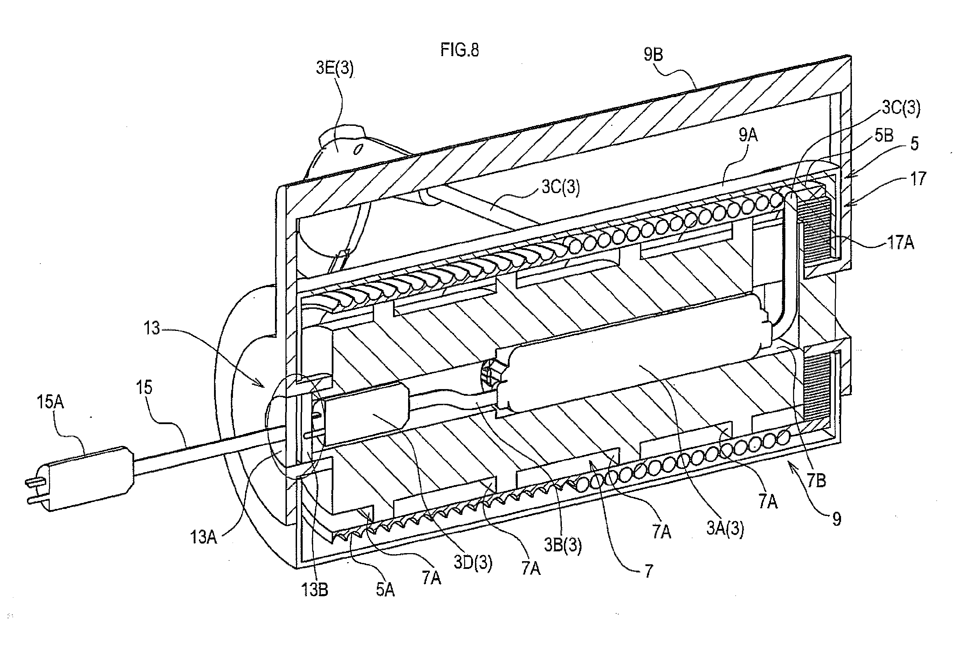

In the present embodiment, the handle 11 that is hand-operated is not employed. As shown in FIG. 8, there is provided a rewinding portion 17 that automatically rewinds the rewound-side charging cable 3C in the one end of the casing 9 in the axial direction.

The rewinding portion 17 according to the present embodiment includes a spirally shaped spring 17A. The spring 17A is configured such that an amount of an elastic deformation thereof is increased continuously as the rotating drum 5 is rotated in a direction in which the rewound-side charging cable 3C is pulled out.

Therefore, when the rewound-side charging cable 3C is pulled out, the spring 17A makes an elastic force act on the rotating drum 5, by which elastic force the rotating drum 5 is rotated in a direction of rewinding. Thus, the rewound-side charging cable 3C can be automatically rewound by using the elastic force of the spring 17A, whereby a usability of the charging-cable storage device 1 can be improved.

In the rewinding portion 17, there is provided a ratchet mechanism (not shown) that permits the rotating drum 5 to be rotated in the direction in which the rewound-side charging cable 3C is pulled out, and that restricts the rotating drum 5 to be rotated in the direction of rewinding.

When rewinding the rewound-side charging cable 3C, the user removes a state in which the rotating drum 5 is restricted by the ratchet mechanism to be rotated. Thus, the elastic force gathered in the spring 17A is released, whereby the rewound-side charging cable 3C is rewound.

### (Embodiment 4)

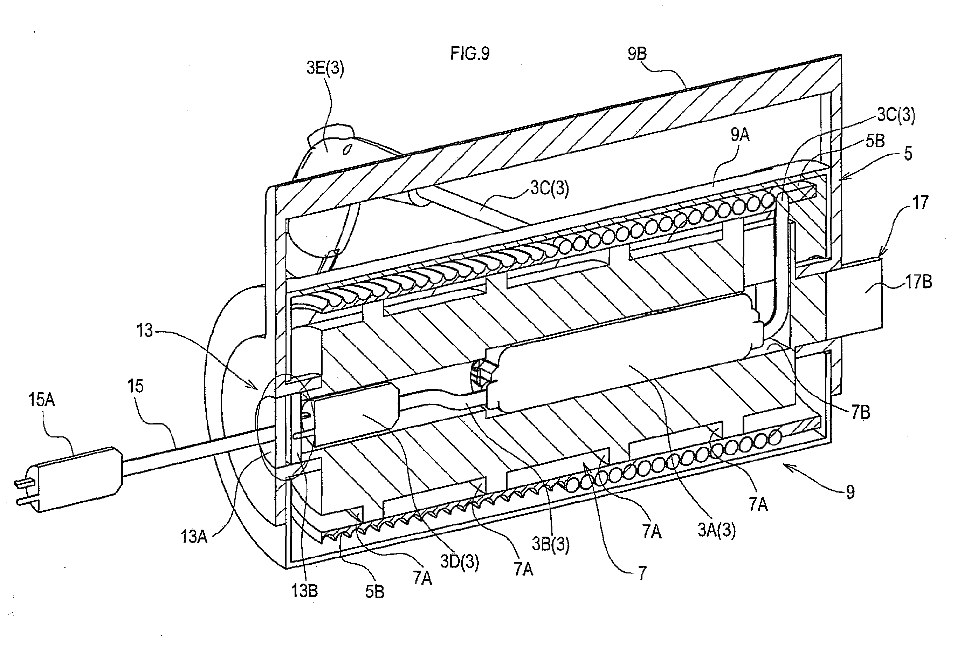

In the present embodiment, an electric motor 17B as a substitute of the spring 17A constitutes the rewinding portion 17, as shown in FIG. 9. To the electric motor 17B, an electric power is supplied from the power-source-side connector 30 via the power-source-side charging cable 15.

In the gripper 9B, there is provided a switch (not shown) that gives instructions to activate the electric motor 17B, that is, the rewinding portion 17. By operating the switch by the user, the rewound-side charging cable 3C can be automatically rewound and pulled out.

### (Other Embodiment)

In Embodiment 4, the slip ring 13 is provided. However, the present invention should not be limited to such embodiment. As in Embodiment 1, the slip ring 13 can be eliminated.

The rewinding portion 17 should not be limited to be electrically-operated by applying the electric motor 17B, or to be mechanically-operated by applying the spring 17A, such as a spiral spring and the like, and so on. In this case, the rewinding portion 17 can be provided in any one of one end of an inside of the rotating drum 5 in the axial direction, one end of an outside of the rotating drum 5 in the axial direction, or both ends of the rotating drum 5 in the axial direction.

In the above-described embodiments, the cylinder 5B and the drum body 7 are formed separately from each other, and the drum body 7 is fitted into the cylinder 5B, thereby constituting the rotating drum 5. However, the present invention should not be limited to such embodiment. The cylinder 5B and the drum body 7 can be integrally molded, or the cylinder 5B and the drum body 7 can be fixed by a screw.

Further, in the above-described embodiments, the charging control box 3A is inserted into and fixed in the storage space provided in the drum body 7. However, the present embodiment should not be limited to such embodiment. For example, the drum body 7 can be configured in two parts, such that the charging control box 3A is sandwiched by the two parts.

The present invention only has to correspond to the spirit of the inventions described in claims, and should not be limited to the aforementioned embodiments.

## Claims

1. A charging-cable storage device that stores a charging cable and a charging control box each used for an electrically-driven vehicle having an electrically-driven motor for traveling, the device comprising:
a rotating drum that is rotatable and that rewinds the charging cable; and
a fixing portion that is provided in the rotating drum and that fixes the charging control box.

2. The charging-cable storage device according to claim 1,
wherein, in an end of the rotating drum in an axial direction, a rewinding portion is provided that makes a force act on the rotating drum, by which force the charging cable is rewound.

3. The charging-cable storage device according to claim 2,
wherein the rewinding portion comprises a spring that can be elastically deformed and that generates the force by which the rotating drum is rotated, and
wherein the rewinding portion is configured such that an amount of an elastic deformation of the spring is increased continuously as the rotating drum is rotated in a direction in which the charging cable is pulled out.

4. The charging-cable storage device according to any one of claims 1 to 3,
wherein a rewind groove is spirally provided in an outer periphery of the rotating drum.

5. The charging-cable storage device according to any one of claims 1 to 4,
wherein the fixing portion is a storage space provided in the rotating drum, in which storage space the charging control box is stored.
